# EUROPÄISCHE PATENTSCHRIFT

(11) **EP 4 304 331 B1**
(45) Veröffentlichungstag und Bekanntmachung des Hinweises auf die Patenterteilung: **26.03.2025**
(21) Anmeldenummer: 22720647.1
(22) Anmeldetag: 04.04.2022
(51) Int. Cl.: A01G 9/24, A01G 31/06, A01G 31/04

(54) **ANORDNUNG UND VERFAHREN ZUR AUFZUCHT VON PFLANZEN IN EINEM GESCHLOSSENEN INNENRAUM**
ASSEMBLY AND METHOD FOR GROWING PLANTS IN A CLOSED INTERIOR
SYSTÈME ET PROCÉDÉ DE CULTURE DE PLANTES DANS UN ESPACE INTÉRIEUR FERMÉ

(30) Priorität: 27.04.2021 DE 102021110717
(43) Veröffentlichungstag der Anmeldung: 17.01.2024
(73) Patentinhaber: BOTT, Reinhard, 76337 Waldbronn (DE)
(72) Erfinder: BOTT, Reinhard, 76337 Waldbronn (DE)
(74) Vertreter: Wunderlich & Heim Patentanwälte PartG mbB
(86) Internationale Anmeldenummer: PCT/EP2022/058879
(87) Internationale Veröffentlichungsnummer: WO 2022/228831

(56) Entgegenhaltungen:
- EP-A1- 3 257 367
- WO-A1-2015/117685
- WO-A1-2018/050816
- WO-A1-2019/037994
- WO-A1-2021/096259
- WO-A2-2013/002548
- CN-U- 202 009 585
- CN-U- 205 511 005
- DE-U1- 202021 000 223

## Beschreibung

Die Erfindung betrifft eine Anordnung zur Aufzucht von Pflanzen in einem geschlossenen Innenraum, gemäß dem Oberbegriff des Anspruchs 1.

Die Erfindung betrifft weiterhin ein Verfahren zur Aufzucht von Pflanzen in einem geschlossenen Innenraum, gemäß dem Oberbegriff des Anspruchs 8 6.

Üblicherweise werden Pflanzen im Freiland aufgezogen. Die Qualität und Menge hängt dabei stark von den Umgebungsbedingungen ab, die jedoch kaum gezielt beeinflussbar sind.

Weiter ist es bekannt, Pflanzen in sogenannten Gewächshäusern aufzuziehen, bei welchen das Tageslicht durch transparente Wände von außen zu den Pflanzen im Gewächshaus gelangen kann. Innerhalb des Gewächshauses können beispielsweise eine Temperatur oder eine Luftfeuchtigkeit eingestellt werden, wodurch sich bereits eine erhebliche Verbesserung und Steigerung der Pflanzenproduktion erzielen lässt. Gegenüber einer Aufzucht im Freiland kann dabei die Pflanzenproduktion um bis zu dem Sechsfachen und mehr erhöht werden.

Seit einigen Jahren ist es weiter bekannt, Pflanzen insgesamt in abgeschlossenen Innenräumen aufzuziehen, wobei eine Konditioniereinrichtung vorgesehen ist, mit welcher die für das Pflanzenwachstum notwendigen Umgebungsbedingungen einschließlich der Lichteinstrahlung eingestellt werden können. Hierbei kann insbesondere eine Entkopplung der Pflanzenproduktion von dem natürlichen äußeren Tag-Nacht-Rhythmus erfolgen. Weiter können unabhängig von Ort, Zeit und jahreszeitlichen Bedingungen nahezu optimale Wachstumsbedingungen für eine Pflanze eingestellt werden, so dass gegenüber einer Freilandproduktion eine Steigerung um das bis zu Dreißigfache und mehr erzielt werden kann. Zudem kann eine Abschottung gegenüber Schädlingen und Pflanzenkrankheiten von außen erfolgen, so dass eine besonders ökologische Pflanzenaufzucht erzielt werden kann.

Aus der WO 2018/220011 A1 geht beispielsweise eine derartige Anordnung zur Pflanzenaufzucht hervor, wobei die Pflanzen mittels einer Fördereinrichtung auch in eine vertikale Richtung bewegbar sind. Durch eine entsprechende Anordnung der Einrichtungen zur Versorgung der Pflanzen mit den nötigen Nährstoffen und zur Beleuchtung können dabei selbst auf relativ geringen Grundflächen große Mengen an Pflanzen effizient aufgezogen werden. Aus WO 2018/050816 A1 ist eine Anordnung gemäß dem Oberbegriff des Anspruchs 1 bekannt.

Derartige Anordnung zur Pflanzenzucht können so in relativ hohen und großen Hallen oder Gebäuden, häufig auch in übereinander angeordneten Aufstellungen eingesetzt werden. Je größer ein abgeschlossener Innenraum zur Pflanzenaufzucht ist, umso schwieriger ist es, für jede individuelle Pflanze lokal die möglichst optimalen Umgebungsbedingungen bereitzustellen. Auch steigt ein notwendiger Energiebedarf zur Einstellung etwa einer erhöhten Temperatur für eine individuelle Pflanze, z. B. in Abhängigkeit von der Wachstumsphase, mit Vergrößerung des Innenraums erheblich an. Der Erfindung liegt die **Aufgabe** zugrunde, eine Anordnung und ein Verfahren zur Pflanzenaufzucht in geschlossenen Innenräumen anzugeben, mit welchen eine Pflanzenaufzucht besonders effizient ermöglicht wird.

Die Aufgabe wird zum einen durch eine Anordnung mit den Merkmalen des Anspruchs 1 und zum anderen durch ein Verfahren mit den Merkmalen des Anspruchs 6 gelöst.

Bevorzugte Ausführungsformen der Erfindung sind in den jeweils abhängigen Ansprüchen angegeben. Die erfindungsgemäße Anordnung ist dadurch gekennzeichnet, dass in dem Innenraum eine Vielzahl von Wachstumsräumen ausgebildet ist, welche jeweils mit einer Umschließungswand an einer Aufnahmeeinheit umschlossen und gebildet sind. Diese Umschließungswände können Trennelemente sein und können bevorzugterweise aus formstabilen und/oder flexiblen und/oder mobilen, leichten Elementen bestehen, die zu allen Seiten hin eingeführt werden können (mechanisch oder wie ein Rollladen von oben nach unten oder umgekehrt) und eine Abgrenzung zum nächstgelegenen Verfahrens-, Wachstums- oder Teilraum bilden können. Eine Grundidee der Erfindung kann darin gesehen werden, dass die einzelnen Pflanzen und/oder Pflanzenteile entsprechend ihren Bedürfnissen und ihrer Wachstumsphasen in den Wachstumsräumen einerseits individuell versorgt werden und andererseits die Möglichkeit haben, ihre eigene, individuelle und der jeweiligen Wachstumsphase entsprechenden Atmosphäre auszubilden.

Durch die Schaffung von individuellen Wachstumsräumen können das Wachstumsklima und die weiteren Wachstumsparameter lokal und kleinräumig eingestellt werden. Hierdurch kann eine erhebliche Energieeinsparung gegenüber der Klimatisierung wesentlich größerer Innenräume erreicht werden. Der Innenraum kann auch als Verfahrensraum bezeichnet werden. Da sich jede Pflanze durch Transpiration, Ausdünstung und Abstrahlung eine eigene Wachstumsatmosphäre schafft, wird durch die Erfindung die Voraussetzung geschaffen, dass sich jede einzelne Pflanze oder eine Pflanzengruppe individuell entwickeln kann.

Der abgeschlossene Innenraum/Verfahrensraum ist von der natürlichen Außenumgebung abgeschlossenen. Erfindungsgemäß wird jedem Wachstumsraum eine Konditioniereinrichtung zugeordnet, mit welcher die Umgebungsbedingungen in jedem Wachstumsraum individuell einstellbar sind. Grundsätzlich wird so auch ermöglicht, in einem geschlossenen Innenraum verschiedene Arten von Pflanzen, welche unterschiedliche oder voneinander abweichende Umgebungsbedingungen brauchen, aufzuziehen.

Erfindungsgemäß wird die Umschließungswand mit einen flexiblen

Membranmaterial oder einer Membran gebildet. Eine Membran in dieser ursprünglichen Bedeutung bedeutet, dünne Strukturen mit unterschiedlichen Eigenschaften, die wie eine Haut oder Folie im Verhältnis zu ihrer Dicke eine große flächige Ausdehnung haben. Membranen werden häufig zur Abtrennung oder Umhüllung verwendet, gerade auch, wenn sie eine selektive Durchlässigkeit haben. Besonders bevorzugt ist es nach einer Ausführungsform der Erfindung, dass das Membranmaterial eine Folie, ein Textilmaterial, insbesondere ein Gewebe, ein Gewirk oder ein Netz, umfasst, wobei das Membranmaterial vorzugsweise gasdurchlässig ausgebildet ist. Das Membranmaterial kann dabei ein besonders dünnes Material sein, welches eine Materialstärke von 1 mm und geringer aufweist.

Die Umfangswand kann dabei lediglich seitlich ausgebildet sein, so dass ein Wachstumsraum nach oben offen ist. Generell kann jedoch der Wachstumsraum insgesamt und damit auch im Deckenbereich geschlossen sein, so dass jeder einzelne Wachstumsraum hermetisch abgeschlossen ist. Durch die vorzugsweise Ausbildung einer Gasdurchlässigkeit wird ein gewünschter Gasaustausch-ermöglicht.

Nach einer weiteren Ausführungsform der Erfindung ist es bevorzugt, dass die Wachstumsräume jeweils ein Substrat bzw, eine Haltevorrichtung zum Aufnehmen einer oder mehrerer Pflanzen und eine Versorgungseinrichtung zum Zuführen von Wasser und/oder Nährstoffen aufweisen. Im Sinne der Erfindung ist unter Substrat nicht allein Erde oder ein erdähnliches Medium zu verstehen. Vielmehr kann im Sinne der Erfindung Substrat ein Trag- oder Halteelement für die Pflanze und insbesondere die Pflanzenwurzeln sein, wobei eine hydroponische oder aeroponische Nährstoffversorgung durch Zuführen einer Nährflüssigkeit beziehungsweise eines dampf- oder aerosolartigen Nährmediums gegeben ist. Die Versorgungseinrichtung kann dabei eine Zuführeinrichtung zum Zuführen von festen, insbesondere pulverförmigen Nährstoffen, und insbesondere eine Zuführeinrichtung für Flüssigkeiten und/oder Gase/Aerosole sein. Als Flüssigkeit wird maßgeblich Wasser vorgesehen, welches mit entsprechend gelösten Nährstoffen und Wirkstoffen für kräftiges und gesundes Pflanzenwachstum versetzt ist.

Die Wachstumsräume können erfindungsgemäß in einer bewegten Transportvorrichtung aufgestellt werden. Zu diesem Zweck sind modulartige Aufnahmeeinheiten an die bewegte Transportvorrichtung mit einer Konditioniereinrichtung angebracht. In sie hinein werden die Wachstumsräume platziert und mit der Konditioniereinrichtung der Aufnahmeeinheit verbunden.

Nach einer Ausführungsform, die nicht Teil der vorliegenden Erfindung ist, ist es vorteilhaft, dass die Aufnahmeeinheiten mit den Wachstumsräumen an einer stationären Tragvorrichtung oder an einer Transportvorrichtung gelagert sind, mit welcher die Aufnahmeeinheiten mit den Wachstumsräumen kontinuierlich oder schrittweise durch den Innenraum/Verfahrensraum transportierbar sind. Insbesondere können die Wachstumsräume zusammen mit der Umschließungswand ein Pflanzmodul bilden, welche insgesamt gleich ausgebildet sein können. Die stationäre Tragvorrichtung kann ein Regal oder ein regalartiger Aufbau sein, wobei die Aufnahmeeinheiten und/oder die Wachstumsräume nebeneinander und/oder übereinander gelagert werden können, etwa in der Art eines Hochregallagers. Bei dieser Anordnung kann die jeweils zugeordnete Konditioniereinrichtung fest an der stationären Tragvorrichtung an einem jeweils für die Aufnahmeeinheiten vorgesehenen Platz angeordnet oder unmittelbar am Wachstumsraum angebracht sein.

Bei der Anbringung der Aufnahmeeinheiten und/oder der Wachstumsräume an einer Transportvorrichtung können insbesondere Transportbänder, Transportketten oder Ähnliches vorgesehen sein, durch welche die Aufnahmeeinheiten und/oder Wachstumsräume horizontal und/oder vertikal, insbesondere Pater-Noster-artig durch den Innenraum/Verfahrensraum befördert werden können. Die Transporteinrichtung weist dabei eine Vielzahl von Transportgliedern auf, welche jeweils eine Aufnahmeeinheit und/oder Wachstumsraum lösbar halten können. Vorzugsweise wird die Aufnahmeeinheit und/oder Wachstumsraum dabei jeweils mit der zugehörigen Konditioniereinrichtung transportiert. Dabei können die Wachstumsräume mit den Pflanzen verschiedene Bereiche Wachstumsphasen durchlaufen, welche unterschiedlich konditioniert sein werden können, etwa unterschiedliche Temperaturen aufweisen. Durch ein kontinuierliches oder schrittweises Transportieren der Wachstumsräume mit den Pflanzen können so für die jeweilige Wachstumsphase optimale Bedingungen eingestellt werden.

Grundsätzlich kann die Konditioniereinrichtung der einzelnen Wachstumsräume in jeder geeigneten Weise ausgebildet sein, um die notwendigen Wachstumsbedingungen für eine Pflanze einzustellen. Erfindungsgemäß weist die Konditioniereinrichtung der einzelnen Wachstumsräume neben einer Beleuchtungseinrichtung auch eine Heiz-, und oder eine Kühleinrichtung auf. Vorzugsweise weist die Konditioniereinrichtung auch eine Belüftungseinrichtung, eine Benebelungs- und/oder Beregnungseinrichtung und/oder Versorgungseinrichtung für eine Nährstoffzuführung und/oder eine Begasungs- oder Bestäubungseinrichtung auf.

Eine weitere Verbesserung des Pflanzenwachstums kann nach einer Ausführungsvariante der Erfindung dadurch erzielt werden, dass jeder Wachstumsraum in weitere neben- oder übereinander liegende, gegliederte Teilräume unterteilt ist, insbesondere in einen oberen/äußeren Teilraum für die dem Licht ausgesetzten, entgegen der Schwerkraft wachsenden Pflanzenteile und in einen unteren/inneren Teilraum für bodenseitige, in Richtung der Schwerkraft wachsenden Pflanzenteile. Dabei kann die Versorgungseinrichtung für Wasser und Nährstoffe vorzugsweise in dem unteren/inneren Teilraum vorgesehen sein, während insbesondere die Beleuchtungseinrichtung dem oberen/äußeren Teilraum zugeordnet ist. Vorzugsweise kann auch ein mittlerer Teilraum oder weitere Teilräume vorgesehen sein, welche vertikal übereinander oder nebeneinander angeordnet sind.

Eine weitere vorteilhafte Ausführungsform der Erfindung besteht darin, dass jedem Wachstumsraum eine Erfassungseinrichtung mit einem oder mehreren Sensoren zugeordnet ist, welche zur Erfassung von Umgebungsbedingungen, einer Wasser- und/oder Nährstoffversorgung und/oder eines Pflanzenwachstums ausgebildet sind, und dass mindestens eine Steuereinrichtung vorgesehen ist, welche mit der Erfassungseinrichtung in Verbindung steht und zum Steuern der Konditioniereinrichtung und/oder der Versorgungseinrichtung in den einzelnen Wachstumsräumen, abhängig von den durch die Erfassungseinrichtung erfassten Werten ausgebildet ist. Somit können in den einzelnen Wachstumsräumen oder auch Teilräumen die jeweiligen Umgebungsbedingungen lokal erfasst und automatisiert eingestellt werden.

Darüber hinaus ist es auch möglich, das jeweilige Pflanzenwachstum individuell zu erfassen und zu kontrollieren. Mit den von der Erfassungseinrichtung erfassten Werten kann über eine Steuereinrichtung, welche zentral oder dezentral an den einzelnen Wachstumsräumen oder gar Teilräumen vorgesehen sein kann, die Konditioniereinrichtung und/oder die Versorgungseinrichtung gesteuert werden, so dass individuell für jeden Wachstumsraum und damit praktisch auch für jede Pflanze oder Pflanzengruppe nahezu optimale Wachstumsbedingungen und eine bedarfsgerechte Einstellung der Wachstumsbedingungen und der Nährstoffversorgung erreicht werden kann. Die Erfindung umfasst weiterhin ein Verfahren zur Aufzucht von Pflanzen in einem geschlossenen Innenraum, wobei in dem Innenraum/Verfahrensraum eine Vielzahl von Wachstumsräumen vorgesehen ist, welche jeweils mit einer Umschließungswand umschlossen sind, welche mit einem flexiblen Membranmaterial gebildet und mit den Aufnahmeeinheiten verbunden werden. Das Verfahren kann insbesondere mit der zuvor beschriebenen erfindungsgemäßen Anordnung durchgeführt werden. Es können dabei die zuvor beschriebenen Vorteile erzielt werden.

Eine bevorzugte Verfahrensvariante besteht nach der Erfindung darin, dass jedem Wachstumsraum eine Erfassungseinrichtung mit einem oder mehreren Sensoren zugeordnet ist, mit welchen die Umgebungsbedingungen, eine Wasser- und/oder Nährstoffversorgung und/oder ein Pflanzenwachstum erfasst werden, und dass mindestens eine Steuereinrichtung vorgesehen ist, welche mit der Erfassungseinrichtung in Verbindung steht, und die Konditioniereinrichtung und/oder eine Versorgungseinrichtung in den einzelnen Wachstumsräumen abhängig von den durch die Erfassungseinrichtung erfassten Daten regelt.

Mit dem Verfahren kann so eine bedarfsgerechte individuelle Einstellung der Wachstumsbedingungen und der Nährstoffversorgung für praktisch jede Pflanze oder Pflanzengruppe in einer Aufnahmeeinheit eingestellt werden.

Bevorzugt wird dazu die Vertical Farm/Indoor Farm unterteilt in den Innenraum/Verfahrensraum und in einen oder mehrere Wachstumsräume. Der Innenraum/Verfahrensraum stellt dabei den Teil des Gebäudes dar, in welchem sich die Wachstumsräume befinden. Zwischen den Wachstumsräumen können Wege/Gänge im Innenraum/Verfahrensraum sein, in welchen man sich bewegen und die Wachstumsräume bei Bedarf erreichen kann.

Bevorzugt sind die Wachstumsräume so konzipiert, dass die einzelnen Wachstumsräume sowohl vom Verfahrensraum als auch von den restlichen Wachstumsräumen weitgehend hermetisch abtrennbar sind, sofern mehrere verschiedene Wachstumsräume installiert werden. Auf diese Weise dient die Erfindung dazu, das System der Vertical Farm/Indoor Farm dahingehend zu optimieren, dass innerhalb der Wachstumsräume die Wachstumsbedingungen auf die einzelne Pflanze und/oder Pflanzengruppe, deren Wachstumsphase, Gesundheitszustand etc. individuell angepasst und verbessert werden können. Zudem können Pflanzen mit unterschiedlich eingestellten Wachstumsparametern in der gleichen Anlage kultiviert werden.

Bevorzugt sind die Wachstums- und Kulturbedingungen der Pflanzen in den Wachstumsräumen regulierbar. Bevorzugterweise schließen die Wachstums- und Kulturbedingungen einen oder mehrere der folgenden Faktoren für die Pflanzenaufzucht mit ein, die im Folgenden Wachstumsparameter genannt werden: Temperatur, Luftdruck, Luftfeuchtigkeit, Luftgeschwindigkeit, Art des Lichts (LED, vollspektral, hybride Zusammensetzung), Lichteinstrahlung, Zusammensetzung der Gasatmosphäre, Zusammensetzung der Nährlösung, pH-Wert, Fortpflanzungs- beziehungsweise Befruchtungsbedingungen etc.

Um den individuellen Bedürfnissen der angebauten Pflanzen am besten entsprechen zu können, wird der Wachstumsraum erfindungsgemäß in weitere, bevorzugterweise drei Teilräume untergliedert. Die Teilräume werden entsprechend der pflanzenanatomischen, beziehungsweise pflanzenmorphologischen sowie pflanzenphysiologischen Eigenschaften aufgeteilt: Im oberen/äußeren Teilraum können sich die üblicherweise oberirdischen Teile der Sprossachse (z. B. Stamm, Halm, Schaft, Stängel), Blätter sowie Früchte der Pflanze ausbilden. Oberer Teilraum deshalb, da sich hier die oberen Pflanzenteile befinden. Äußerer Teilraum deshalb, da sich dieser Teilraum, je nach Ausführung, außerhalb der Trage- beziehungsweise waagrechten oder senkrechten Transportmechanik befindet. Des Weiteren gibt es einen unteren/inneren Teilraum, in welchem sich die Wurzeln, Knollen, Knoten, Pilze etc. ausbilden können. Unterer Teilraum deshalb, da hier die unteren Pflanzenteile wachsen. Innerer Teilraum deshalb, da sich dieser Teilraum, je nach Ausführung, innerhalb der Trage- beziehungsweise Transportmechanik befindet. Zwischen dem oberen/äußeren und dem unteren/inneren Teilraum befindet sich der mittlere Teilraum, der im Wesentlichen zwei Funktionen dient:
Zum einen dient der mittlere Teilraum zur Unterstützung des Pflanzenwachstums, indem darin die Pflanzenbehälter, Substrate oder andere, zur Fixierung des Saatguts oder der Pflanzen geeignete Vorrichtungen eingefügt werden können. Dies schließt auch die Möglichkeit von individuell oder gesamt austauschbaren Aufnahmevorrichtungen mit ein, die ähnlich einer einzelnen Box oder einer Schublade entnommen werden können. Des Weiteren kann der mittlere Teilraum erfindungsgemäß zur zusätzlichen Zuführung und Dosierung einer Nährlösung in Form von aeroponischen oder hydroponischen Systemen, eines Flüssigkeitsfilms oder anderer zur Nährstoffversorgung geeigneter Systeme dienen.

Zum anderen kann der mittlere Teilraum für die Installation technischer Betriebs- und Hilfsvorrichtungen jeglicher Art dienen, wie beispielsweise zur Aufnahme von Sensoren, Kontroll-, Regel- und Steuerelementen, Lichteinstrahlung, Belüftung, Luftdruck, Stützelemente etc.

Bevorzugt können die Wachstumsparameter im oberen/äußeren und unteren/inneren, beziehungsweise in allen drei Teilräumen individuell reguliert werden, unabhängig davon, ob ein hydroponisches, aeroponisches oder anderweitiges System der Nährstoff- und ggf. Wasserzufuhr installiert ist. Zudem können die Teilräume in ihrer Architektur, ihrem Design und mit Hilfsvorrichtungen derart ausgestattet sein, dass insbesondere das Pflanzenwachstum und die Pflanzen für die gewünschte stoffliche Zusammensetzung im oberen/äußeren und unteren/inneren Teilraum individuell und optimal gefördert werden können. Spezielle Einbauten oder auf die Pflanze wirkenden Reize lenken zu diesem Zweck das Wachstum aller Pflanzenorgane auf gewünschte Weise (z. B. durch ausreichend Raum, Stützen, Lenkeinbauten etc.) und ermöglichen eine vereinfachte und effiziente Ernte und/oder Weiterverarbeitung der Pflanzen.

Bevorzugt können die Wachstums- und Teilräume bei Bedarf durch Umschließungswände, beispielsweise Trennelemente, weiter untergliedert oder geöffnet oder geschlossen werden, sodass sich die Wachstumsparameter in den unterschiedlichen Wachstums- und Teilräumen jeweils voneinander unterscheiden können. Dies gilt insbesondere zur Abgrenzung der Umgebungsbedingungen, die im Verfahrensraum herrschen. Die Trennelemente können bevorzugterweise aus formstabilen und/oder flexiblen und/oder mobilen Elementen bestehen, die zu allen Seiten hin eingeführt werden können (mechanisch oder wie ein Rollladen von oben nach unten oder umgekehrt) und eine Abgrenzung zum nächstgelegenen Verfahrens-, Wachstums- oder Teilraum bilden können. Die Trennelemente können erfindungsgemäß aus ein- oder mehrlagigen, leichten, steifen, falt- oder rollbaren textilen und/oder gummiartigen Trägermaterialien bestehen. Zudem sind die Trennelemente aus Trägermaterialien mit unterschiedlichen mechanischen und/oder oberflächlichen Eigenschaften ausgestattet, die eine oder mehrere der folgenden Eigenschaften umfassen können: Luft- und/oder flüssigkeitsdichte Eigenschaften, unterschiedliche Permeabilitäten für Gasgemische und/oder Wasser, unterschiedliche Benetzungseigenschaften für unterschiedliche Flüssigkeiten (hydrophil/hydrophob/lipophil/lipophob), unterschiedliche durch Elektrizität beeinflussbare Eigenschaften (z. B. Stromleitung, Aufbau eines kapazitiven oder induktiven Feldes, Erhitzung, Abkühlung, Lichterzeugung), lichtleitende oder lichtstrahlende oder lichtreflektierende Eigenschaften, heizende oder kühlende Eigenschaften, die Möglichkeit, Luftbewegung in den Wachstumsraum weiterleiten oder darin erzeugen zu können und/oder eine Bewegung an den Pflanzen zu erzeugen, die Möglichkeit, unterschiedliche Sensoren zur Messung der Wachstumsparameter an den Oberflächen der Trennelemente anbringen zu können. Die textilen Trennelemente können zudem derart ausgerüstet sein, dass im Wachstumsraum ein in beliebiger Richtung wirkendes elektrisches oder magnetisches Feld zur Beeinflussung des Pflanzenwachstums und/oder des Lichts erzeugt werden kann. In einer besonderen Form sind die Trennelemente erfindungsgemäß mit Membranen mit geeigneter Porenöffnung ausgerüstet, sodass die Luftfeuchtigkeit und/oder Zusammensetzung der Luft beeinflusst und/oder die Luft filtriert beziehungsweise hygienisiert werden kann. Die Trennelemente sind bevorzugterweise leicht und können bei Bedarf mit wenig Aufwand und platzsparend transportiert und/oder verstaut werden.

In einer besonderen Ausführung kann der untere/innere Teilraum erfindungsgemäß derart unterteilt werden, dass die Wurzeln jeder kultivierten Pflanze in einer eigenen Wurzelkammer wachsen können. Die Wurzelkammer kann mit formstabilen und/oder textilen Trennelementen und/oder mit semipermeablen, auf textilen Trägern aufgebrachten Membranen, ggf. mit einem stabilisierenden Gerüst zur mechanischen Stütze der Wurzelkammer, ausgerüstet sein, die das Eindringen von Flüssigkeitsanteilen in die Wurzelkammer ermöglichen. Der untere/innere Teilraum kann vollständig in Wurzelkammern unterteilt sein. Alternativ können einzelne Wurzelkammern ohne Nachbarschaftskontakt zu anderen Wurzelkammern in einer Nährlösung hängen, welche die Wurzelkammern umspülen. Die Aufnahme der Nährlösung in die Wurzelkammern kann durch einen osmotischen Druckunterschied oder durch transmembrane Druckdifferenz durch Erzeugung eines Unterdrucks in der Wurzelkammer beziehungsweise Überdrucks in den Zwischenräumen reguliert werden. Die Wurzelkammern können ganz oder teilweise mit Nährlösung gefüllt sein.

Die Zusammensetzung der Nährlösung kann erfindungsgemäß für jeden Wachstumsraum und/oder jede Wurzelkammer individuell und zeitunabhängig eingestellt werden, sodass die Pflanze je nach Art, Wachstumsphase, Gesundheitsstatus etc. optimal mit Nährstoffen versorgt werden kann. Die Nährlösung wird zu diesem Zweck an geeigneter Stelle und auf geeignete Weise (z. B. hydroponisch oder aeroponisch) eingeführt. Die Nährstofflösung kann durch Umpumpen ein- oder mehrmalig verwendet werden. Mittels einer Analyse ihrer Zusammensetzung kann die Nährlösung bei Bedarf zudem entsprechend mit Nährstoffen und/oder Wasser ergänzt und/oder neu eingestellt werden. Bei bewegten, transportierenden Systemen kann die Nährlösung im Gegenstrom- oder im Kreuzstromverfahren relativ zur Transportrichtung geführt werden. Bei Versorgung der Pflanzen durch Hydroponik oder Filmtechnologie kann die Grundeinstellung der Nährlösung mittels eines festkörperlichen Salzblocks sichergestellt werden. Der Austauschzeitpunkt des Salzblocks kann nach einer bestimmten Zeit oder durch eine Analyse der abgeführten Nährlösung bestimmt werden.

Bevorzugt können die klimatischen Bedingungen in den einzelnen Wachstums- und Teilräumen durch Zu- und Abluft geregelt werden, die z. B. folgende Wachstumsparameter umfassen: Temperatur, Luftdruck, Luftfeuchtigkeit, pH-Wert der Luftfeuchtigkeit, Luftzusammensetzung, Luftgeschwindigkeit, in der Luft enthaltene Nährstoffe. Dies kann durch Zu- und Ableitungen geschehen. Die Zu- und Ableitung kann in einer besonderen Ausführung auch durch textile Trennelemente an geeigneten Stellen geschehen. Zusätzlich können stationäre oder verstellbare Strömungselemente im Wachstumsraum die Luftregulierung im Wachstumsraum gezielt lenken. Bevorzugterweise können die Trennelemente doppelwandig ausgeführt werden, wobei die der Pflanze zugwandte Schicht semipermeabel oder permeabel ist und die zugeführte Luft filtriert beziehungsweise die stoffliche Zusammensetzung des Gases oder Gasgemisches eingestellt werden kann. Erfindungsgemäß kann die Regulierung der Luftzu- und -abfuhr zeitweise oder dauerhaft geschehen. Bei Bedarf kann dadurch eine gerichtete Luftströmung erzeugt werden, welche die Pflanze mechanisch bewegt. Diese Bewegung kann die Pflanze, ggf. in Kombination mit einer gerichteten Beleuchtung oder mit auf die Pflanze wirkenden Reizimpulse, in eine Vorzugsrichtung ausrichten, wodurch die Vorder- und Rückseite der Blätter individuell beströmt und beleuchtet werden können. Zudem können die klimatischen Bedingungen wie z. B. Temperatur und Luftbewegung erfindungsgemäß angepasst und zur Trocknung der Pflanze verwendet werden.

Die Wachstumsräume werden bevorzugt mit vollspektralem, aus Sonnenlicht gewonnenem Licht versorgt, das über Lichtkollektoren außerhalb des Verfahrensraums gewonnen und über Lichtleiter in die Wachstumsräume geleitet wird oder mit mono- beziehungsweise multichromatischem Licht aus elektrischen Lichtquellen (z. B. LED). Ist die Lichtversorgung durch das Sonnenlicht für eine optimale Kultivierung nicht ausreichend, kann die Lichtintensität erfindungsgemäß mittels elektrischer Lichtquellen ergänzt werden. Zu diesem Zweck können die Lichtverhältnisse in den Wachstumsräumen an geeigneten Stellen durch Sensoren erfasst und insbesondere im oberen/äußeren und unteren/inneren Teilraum durch Lichtinstallationen derart optimiert werden, dass die Pflanzen individuell gefördert werden können. Dies schließt mit ein, dass bei Bedarf z. B. auch die Blattunterseiten, Wurzeln etc. mit ausreichend Licht versorgt werden können. Neben der Versorgung der Pflanzen mit vollspektralem Licht aus Sonnenenergie und/oder alternativ oder komplementär eingesetztem vollspektralem elektrischen Licht kann erfindungsgemäß zudem bei Bedarf mono- oder multichromatisches Licht gezielt zur Förderung bestimmter Eigenschaften (z. B. Wachstumsgeschwindigkeit, chemische Zusammensetzung, Gesundheit der Pflanzen) eingesetzt werden.

Die Wachstumsparameter können bevorzugt in jedem einzelnen Wachstums- und Teilraum individuell eingestellt werden. Die Zusammensetzung und die individuelle Zurverfügungstellung der Wachstumsparameter können durch pflanzenspezifische Algorithmen bestimmt und bedarfsgerecht geregelt werden. Auf diese Weise können spezifische, potenzielle Krankheiten an entsprechende Pflanzenteilen gezielt lokalisiert und der Bedarf an den einzelnen Anteilen der Wachstumsparameter prophylaktisch eingestellt werden, sodass das Wachstum und die Abwehrkräfte der Pflanzen gestärkt und sie möglichst ohne Erkrankung und/oder Befall und ohne den Einsatz von Pflanzenschutzmitteln kultiviert werden können.

Im Wachstumsraum kann jedes geeignete Kultivierungssystem installiert werden. In einem Regal-System können beispielsweise bevorzugterweise hydroponische und/oder aeroponische Systeme zur Pflanzenkultivierung eingesetzt werden. Alternativ können Pflanzenröhren beziehungsweise Pflanzensäulen vertikal nebeneinander aufgestellt werden, um die Pflanzen über aeroponische Systeme mit Nährstoffen zu versorgen. Eine weitere Alternative eines Kultivierungssystems in einem Wachstumsraum kann ein bewegtes System sein, in welchem die Samen beziehungsweise Jungpflanzen auf Bändern bzw. Pflanzenträgern eingebracht sind, die entlang einer festgelegten Umlaufbahn vertikal oder horizontal bewegt werden. Die Bänder können Tragbänder aus geeigneten Materialien wie Gummi oder Textil bestehen oder aus Glieder- , Leisten- oder Lamellenbändern aufgebaut sein.

Die Wachstumsräume können im Verfahrensraum nebeneinander und/oder übereinander angeordnet werden, um auf diese Weise die Anbaufläche im Vergleich zur Grundfläche des Verfahrensraums zu multiplizieren. Die Erfindung schließt mit ein, dass die Wachstumsräume im Verfahrensraum auf folgende Weisen installiert werden können, wobei die Wachstumsparameter in den Wachstums- und Teilräumen in allen Ausführungen bei Bedarf mittels Sensoren gemessen und über Versorgungsleitungen individuell reguliert und gesteuert werden können:
Zum einen können die Wachstumsräume auf oder in einzelnen Etagen eines Regalsystems ortsfest oder mit auswechselbaren Teilräumen und/oder Trennelementen oder als komplett transportable, mobile Wachstumsräume installiert werden.

Alternativ können die Wachstumsräume in vertikaler und/oder horizontaler Anordnung entlang einer Achse kontinuierlich oder absatzweise mit regulierbarer Wanderungsgeschwindigkeit auf einer umlaufenden Transportmechanik bewegt werden. Die Transportmechanik kann z. B. als Tragband, Förderkette oder Führungsschiene mit Zugvorrichtung installiert werden. Zudem können mehrere Aufnahmeeinheiten die Transportmechanik bilden. In diesem Fall können auf die Aufnahmeeinheiten die Wachstumsräume installiert werden, welche zu den Seiten sowie nach oben mit mobilen oder festen Trennelementen von ihrer Umgebung (den benachbarten Wachstumsräumen sowie dem Verfahrensraum) abgetrennt werden, sodass in den Wachstums- und Teilräumen individuell konditionierbare Wachstumsbedingungen geschaffen werden können. Dies schließt mit ein, dass die Wachstums- und/oder Teilräume individuell mit Versorgungsleitungen angesteuert werden können oder die Nährlösung einmalig in ausreichender Menge in den Wachstumsraum eingegeben wird. Am Ende des Transportweges können die kastenförmigen Wachstums- und Teilräume durch Abnehmen beziehungsweise Verstauen der Trennelemente in ihren äußeren Abmaßen deutlich verkleinert werden. Die verbleibenden Aufnahmeeinheiten werden am Ende des Transportweges gekippt und kopfüber während ihres Weges zum Anfang des Transportweges nach Bedarf vorteilhaft behandelt, z. B. gereinigt und/oder hygienisiert. In einer besonderen Ausführung kann am Anfang des Transportweges eine Neubestückung der Aufnahmeeinheiten und/oder die Installation und Neubestückung von Wachstumsräumen erfolgen.

Alternativ kann eine vertikale und/oder horizontale Transportführung der Wachstumsräume insbesondere mittels Kipplager erfolgen, an welche die Aufnahmeeinheiten befestigt werden. Bei dieser Ausführung erfolgt auch der Rücktransport der Aufnahmeeinheiten /Wachstumsräume aufrecht, weshalb die Transportzeit auf der Unterseite beziehungsweise Gegenseite des Transportweges auch zur Kultivierung von Pflanzen genutzt und nahezu verdoppelt werden kann. Alternativ kann der Rücktransport auch zur Behandlung wie Reinigung und/oder Sterilisierung erfolgen. Bei Bedarf können die Seitenwände/Trennelemente eingerollt werden.

Bevorzugt können die Wachstumsräume mit individuellen Antriebseinheiten ausgestattet und damit zurück zum Ausgangspunkt transportiert und neu bestückt werden.

Die Transportmechanik kann sich vorzugsweise auch in einem einzelnen abgrenzbaren Wachstumsraum befinden. In diesem Fall stellt ein angetriebenes Transportband die Wachstumsvorrichtung dar, in welchem die Pflanzen fixiert werden. Die Nährlösung wird von der Rückseite des Transportbandes auf geeignete Weise an die Pflanzen herangebracht.

Die Wanderungsgeschwindigkeit des Transports kann erfindungsgemäß in allen beschriebenen Fällen reguliert und an die Zeit bis zum gewünschten Reifestadium der jeweiligen Pflanzen angepasst werden.

Die Erfindung wird nachfolgend anhand bevorzugter Ausführungsformen beispielhaft beschrieben, welche schematisch in den Zeichnungen dargestellt sind. In den Zeichnungen zeigen:
- Fig. 1: Innenraum/Verfahrensraum, Wachstumsräume und Teilräume mit charakteristischen Hilfsmitteln;
- Fig. 2: Hilfsvorrichtungen im Wachstumsraum;
- Fig. 3: Innenraum/Verfahrensraum mit Frontansicht von Wachstumsregalen, Wachstumsetagen, Trennelementen und Wachstumsräumen;
- Fig. 4: Seitenansicht von Fig. 3: Innenraum/Verfahrensraum mit Wachstumsregalen, Wachstumsetagen, Trennelementen und Wachstumsräumen;
- Fig. 5: Wachstumsräume mit der Möglichkeit zur unterschiedlichen Einstellung der Wachstumsparameter;
- Fig. 6: Eine horizontal verlaufende Transportmechanik mit Kastenelementen zum Transport von Wachstumsräumen mit Trennelementen;
- Fig. 7: Eine horizontal verlaufende Transportmechanik mit als umlaufendes Band angeordneten Aufnahmeeinheiten, hier verläuft der Rücktransport kopfüber;
- Fig. 8: Ansicht einer horizontal verlaufenden Transportmechanik mit Pendellager und Aufnahmeeinheiten; und
- Figuren 9 und 10:: Ansicht einer vertikal verlaufenden Transportmechanik mit Pendellagern und Aufnahmeeinheiten.

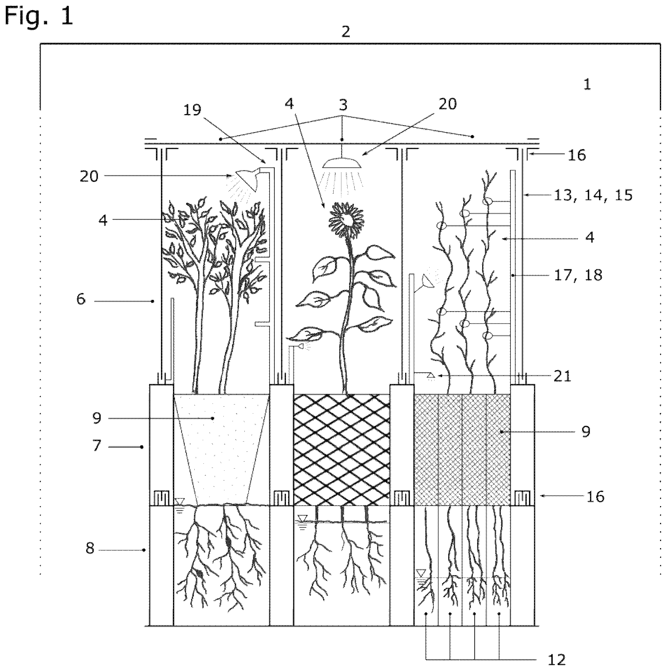

Die Fig. 1 zeigt schematisch eine erfindungsgemäße Anordnung 1 mit einem Innenraum/Verfahrensraum 2, in welchem sich Wachstumsräume 3 für Pflanzen 4 an Aufnahmeeinheiten 5 befinden. Die Wachstumsräume 3 sind wiederum unterteilt in drei Teilräume, einen oberen/äußeren Teilraum 6, einen mittleren Teilraum 7 mit Pflanzenbehälter und/oder einem Substrat 9 und einem unteren/inneren Teilraum 8, in dem eine Nährlösung 10 über eine kanalartige Versorgungseinrichtung 11 zur Verfügung gestellt wird und sich Wurzeln, Knollen, Mycellen etc. der Pflanze 4 ausbilden. In einer besonderen Form kann der untere/innere Teilraum 8 nochmals in Wurzelkammern 12 unterteilt werden. Charakteristisch sind Umschließungswände 13 aus Membranmaterial 14 und/oder die Trennelemente 15 und Dichtungen 16 zur Trennung der einzelnen Wachstumsräume 3 und Teilräume 6, 7, 8 untereinander. Die folien- oder textilartigen Umschließungswände 13 sind an Halterungen 17 angebracht oder aufgespannt. An diesen Halterungen 17 können die Pflanzen 4 entlang von Stützeinrichtungen 18 gezogen werden und/oder über Konditioniereinrichtungen 19, welche eine Beleuchtungseinrichtung 20 oder Befeuchtungseinrichtungen 21 sein kann, befestigt sein, über welche die Wachstumsbedingungen in den Wachstumsräumen 3 eingestellt werden.

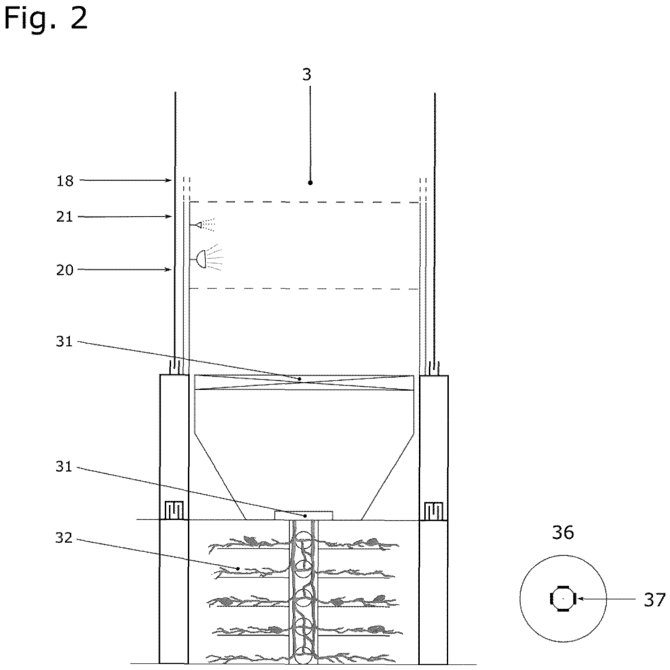

Fig. 2 zeigt Hilfseinrichtungen 18 im Wachstumsraum 3. Im oberen/äußerer Teilraum 6 sind beispielhaft Befestigungs-, Trage- oder Stützeinrichtungen 18 sowie Befeuchtungseinrichtungen 21 und Beleuchtungseinrichtungen 20 dargestellt. Am oberen und unteren Ende des mittleren Teilraums 7 können Schneideinrichtungen 32 zum Abtrennen der oberen und unteren Pflanzenteile installiert werden. Im unteren/inneren Teilraum 8 sind beispielhafte Einbauten 33 zum Aufnehmen für alte und junge Wurzeln sowie für die Knollenablagerung dargestellt. Die Draufsicht zeigt einen beispielhaften Einbau im Wurzelbereich mit Öffnungen für wachsende Wurzeln.

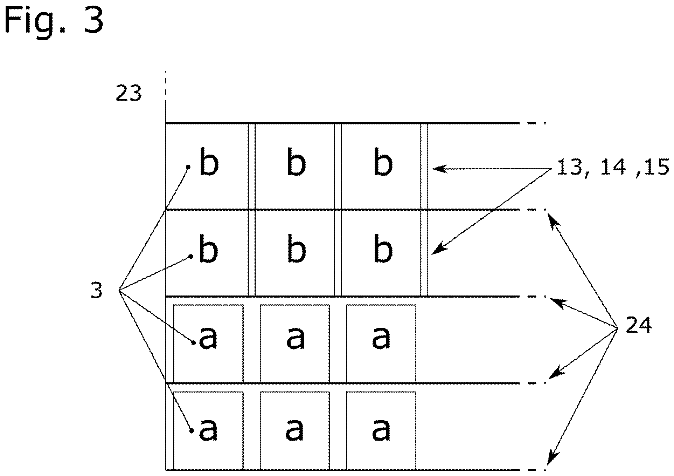

Fig. 3 zeigt den Innenraum/Verfahrensraum 2 mit einer Tragvorrichtung 22, welche durch Wachstumsregale 23 gebildet ist, welche wiederum in Wachstumsetagen 24 aufgeteilt sind. In den Wachstumsetagen 24 befinden sich die Aufnahmeeinheiten 5 mit den Wachstumsräumen 3. Die individuellen, abgeschlossenen Aufnahmeeinheiten 5 mit den Wachstumsräumen 3 können dabei entweder als einzelne Kastenelemente nebeneinander stehen (a) oder in Serie angeordnet durch gemeinsame Umschließungswände 13, 14, oder Trennelemente 15 voneinander getrennt werden (b).

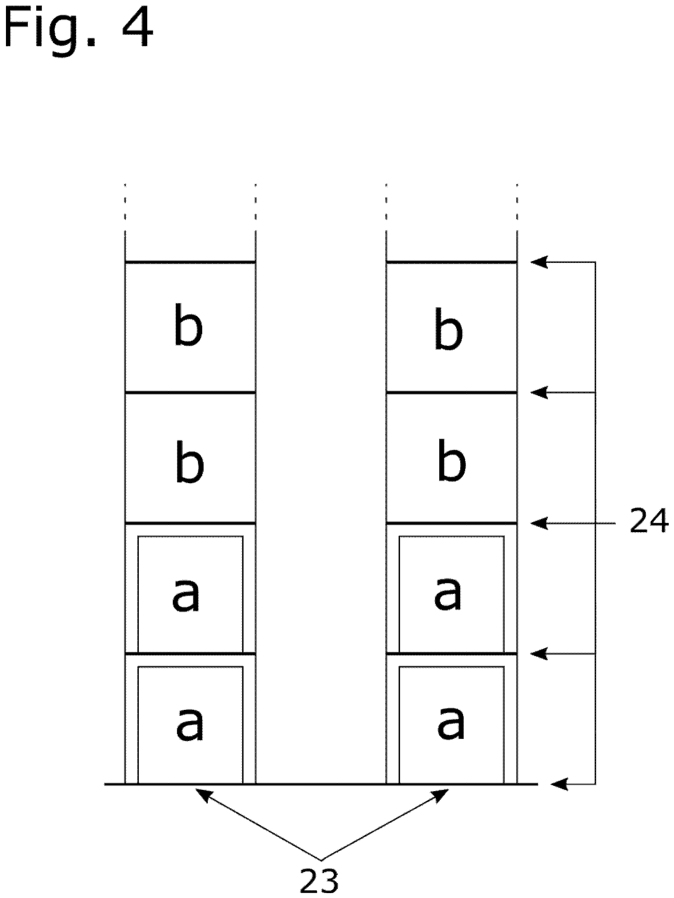

In Fig. 4 ist die Seitenansicht von Fig. 3 gezeigt, die sich im Innenraum/Verfahrensraum 2 befindet. Hierin sind mehrere Wachstumsregale 23 als Tragvorrichtung 22 zur Aufnahme von Aufnahmeeinheiten 5 und Wachstumsräumen 3 angeordnet.

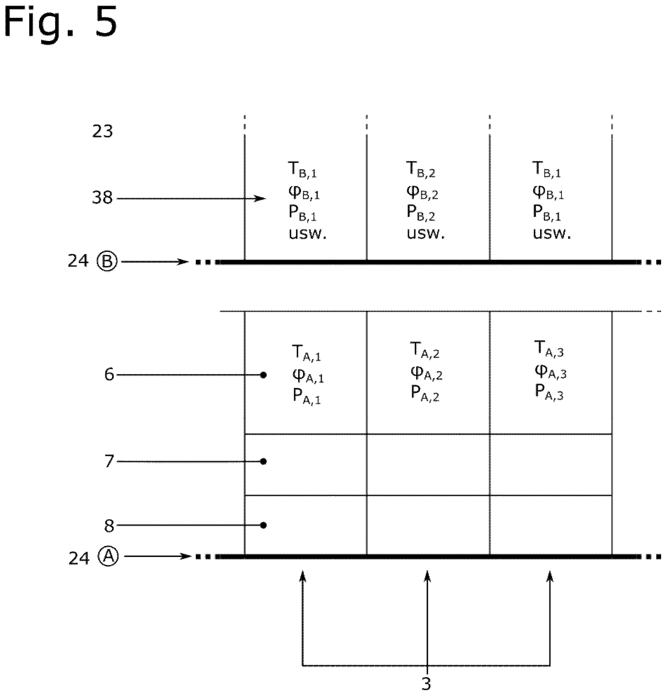

Fig. 5 verdeutlicht schematisch die Wachstumsetagen 24 mit getrennten Wachstumsräumen 3 und den unterschiedlich eingestellten Wachstumsparametern, z. B. Temperatur T, Luftfeuchtigkeit phi, Druck p usw., in den einzelnen Wachstumsräumen 3 und teilweise auch in den unterschiedlichen Teilräumen 6, 7, 8.

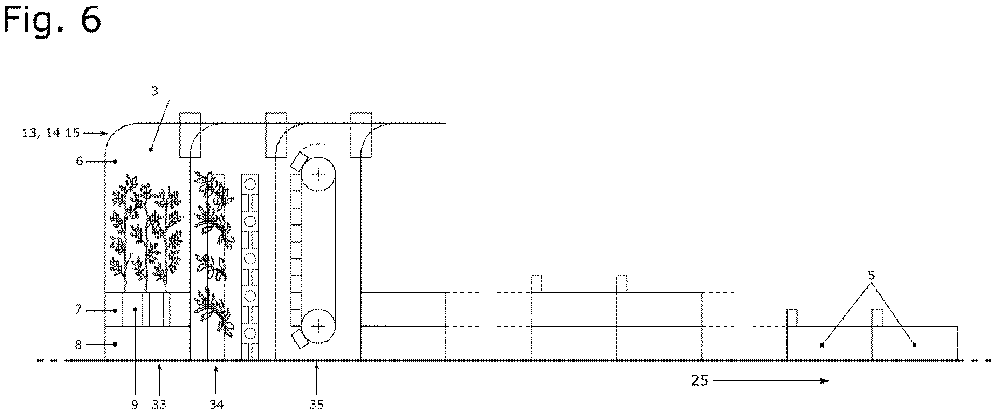

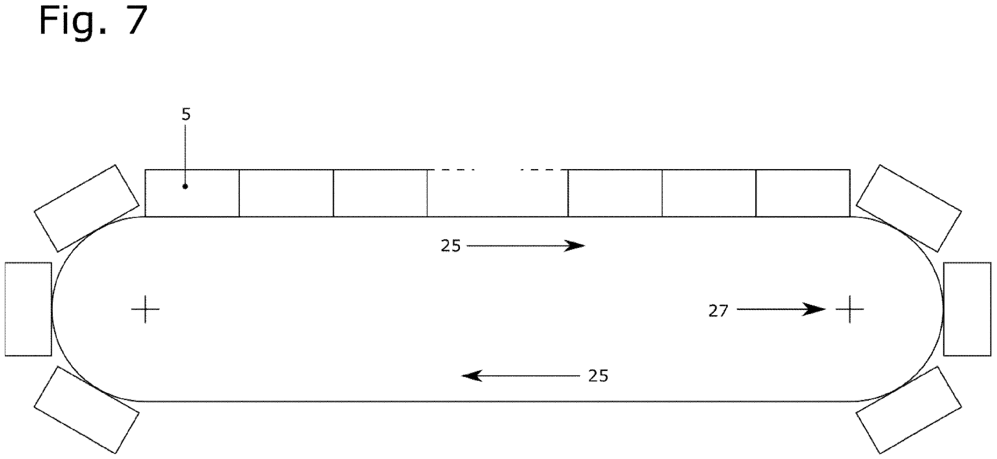

Fig. 6 und 7 zeigen eine Anordnung 1 mit einer Transportvorrichtung 25, welche auf eine horizontale Transportmechanik mit einer Transportkette/Förderkette (Zugkette) 26 zur Fortbewegung der Wachstumsräume 3 mit kastenförmigen Aufnahmeeinheiten 5 (Kastenelementen 27).

Fig. 6 zeigt schematisch durch Trennelemente 15 getrennte Wachstumsräume 3 mit verschiedenen möglichen Anbaumethoden (horizontal-flächige Anbaumethode; Anbaumethode mittels einer Pflanzensäule 36; Anbaumethode mittels einer bewegten Transportmechanik innerhalb des Wachstumsraumes 37). Die Aufnahmeeinheiten 5 (Kastenelemente 27) bilden einen Teil der Transportvorrichtung 25, auf welchen die bei Bedarf abnehmbaren Umschließungswände 13, 14, 15 zum Bilden der Wachstumsräume 3 befestigt und/oder die flexiblen, bei Bedarf einrollbaren Umschließungswände 13, 14, 15 verstaut werden können.

Fig. 7 zeigt schematisch die Befestigung von Aufnahmeeinheiten 5 (Kastenelementen 27), in welche einzelne Wachstumsräume 3 eingesetzt werden können. Der Rücktransport der Aufnahmeeinheiten 5 (Kastenelemente 27) erfolgt kopfüber bei horizontal gerichteten Umlenkachsen 28 oder in einer horizontalen Ebene bei vertikal gerichteten Umlenkachsen 28 erfolgen.

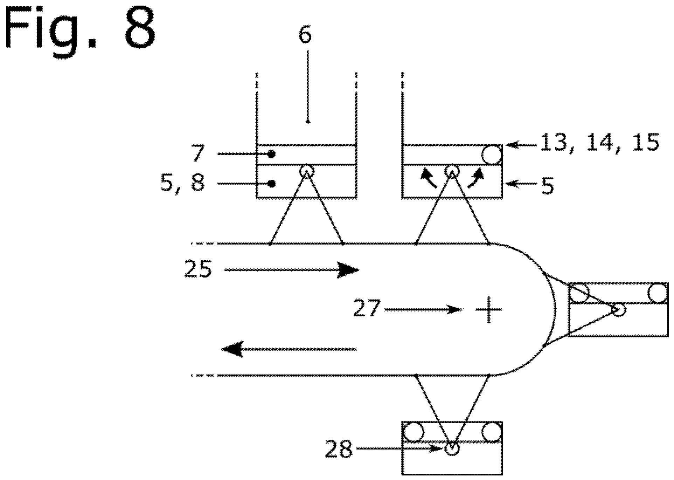

Die Fig. 8 zeigt den Ausschnitt einer Transportvorrichtung 25, bei welcher die Aufnahmeeinheiten 5 (Kastenelemente 27) mit horizontalen Umlenkachsen 28 mit nicht dargestellten Förderrädern mittels Pendellager 29 befestigt sind. Die Umschließungswände 13, 14, 15 können bei Bedarf (z. B. zur Ernte, zum Rücktransport, zur Reinigung) einzeln eingerollt beziehungsweise in den äußeren Abmaßen reduziert oder auch abgenommen werden. Der Rücktransport der Aufnahmeeinheiten 5 (Kastenelemente 27) erfolgt aufrecht.

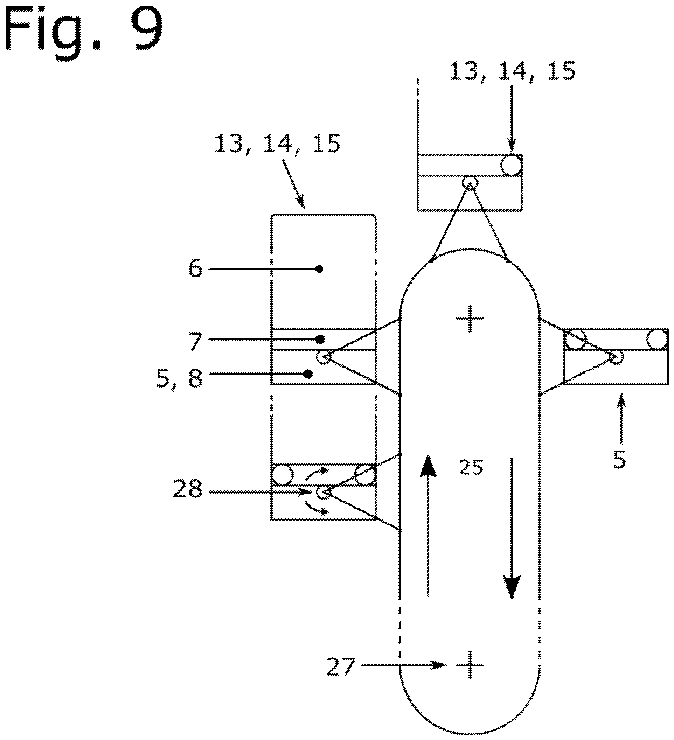

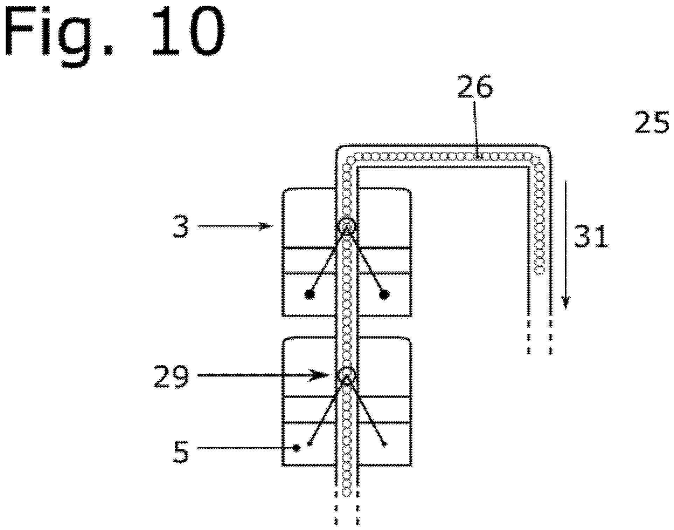

Die Fig. 9 und 10 zeigen Transportvorrichtungen 25 mit einer vertikal verlaufenden Transportmechanik, an welcher die Aufnahmeeinheiten 5 (Kastenelemente 27) mit den Wachstumsräumen 3 mittels Pendellager 29 befestigt sind. Eine Transportkette/Förderkette (Zugkette) 26 ist dabei umlaufend um Förderräder mit vertikal gerichteten Umlenkachsen 28 geführt. Die flexiblen Umschließungswände 13, 14, 15 lassen sich bei Bedarf einzeln abnehmen oder einrollen. Die Pendellager sind an der Transportkette/Förderkette (Zugkette) 26 mit einem geeigneten Bewegungselement 30 befestigt und werden entlang einer vorgegebenen Führungsbahn 31 bewegt. Der Rücktransport der Aufnahmeeinheiten 5 (Kastenelemente 27) erfolgt aufrecht.

## Patentansprüche

1. Anordnung zur Aufzucht von Pflanzen (4) in einem geschlossenen Innenraum (2), mit
- einer Vielzahl von Wachstumsräumen (3) zum Aufnehmen einer oder mehrerer aufzuziehender Pflanzen (4) und
- mindestens einer Konditioniereinrichtung (19) zum Einstellen der für das Pflanzenwachstum notwendigen Umgebungsbedingungen, wobei die Konditioniereinrichtung (19) mindestens eine Beleuchtungseinrichtung (20) umfasst,
- wobei in dem Innenraum (2) eine Vielzahl von Wachstumsräumen (3) ausgebildet ist, welche jeweils mit einer Umschließungswand (13, 15) umschlossen und an einer Aufnahmeeinheit (5) gebildet sind, und
- wobei jedem Wachstumsraum (3) eine Konditioniereinrichtung (19) zugeordnet ist, welche eine Heiz- und/oder eine Kühleinrichtung umfasst, mit welcher eine Temperatur in dem Wachstumsraum (3) individuell anpassbar und regulierbar ist, wobei die Aufnahmeeinheiten (5) an einer Transportvorrichtung (25) gelagert sind, mit welcher die Aufnahmeeinheiten (5) kontinuierlich oder schrittweise durch den Innenraum/Verfahrensraum (2) transportierbar sind,
dadurch**gekennzeichnet**,
dass die Umschließungswand (13, 15) ein flexibles Membranmaterial (14), insbesondere eine Folie, ein Textilmaterial, ein Gewebe, ein Gewirk oder ein Netz, umfasst, wobei das Membranmaterial (14) vorzugsweise gasdurchlässig ausgebildet ist.

2. Anordnung nach Anspruch 1,
dadurch**gekennzeichnet**,
- dass die Aufnahmeeinheiten (5) jeweils ein die Pflanze haltendes Substrat (9) zum Aufnehmen einer oder mehrerer Pflanzen (4) und eine Versorgungseinrichtung (11) zum Zuführen von Wasser und/oder Nährstoffen aufweisen.

3. Anordnung nach einem der Ansprüche 1 bis 2,
dadurch**gekennzeichnet**,
- dass die Konditioniereinrichtung (19) neben einer Beleuchtungseinrichtung (20) zumindest eine der folgenden Einrichtungen aufweist:
- eine Belüftungseinrichtung,
- eine Befeuchtungseinrichtung (21),
- eine Beregnungseinrichtung und/oder
- eine Begasungs- oder Bestäubungseinrichtung.

4. Anordnung nach einem der Ansprüche 1 bis 3,
dadurch**gekennzeichnet**,
- dass jeder Wachstumsraum (3) in weitere horizontal gegliederte Teilräume (6, 7, 8) unterteilt ist, insbesondere in einen oberen/äußeren Teilraum (6) für die dem Licht ausgesetzten Pflanzenteile und in einen unteren/inneren Teilraum (8) für bodenseitige Pflanzenteile.

5. Anordnung nach einem der Ansprüche 1 bis 4,
dadurch**gekennzeichnet**,
- dass jedem Wachstumsraum (3) eine Erfassungseinrichtung mit einem oder mehreren Sensoren zugeordnet ist, welche zur Erfassung von Umgebungsbedingungen, einer Wasser- und/oder Nährstoffversorgung und/oder eines Pflanzenwachstums ausgebildet sind, und
- dass mindestens eine Steuereinrichtung vorgesehen ist, welche mit der Erfassungseinrichtung in Verbindung steht und zum Steuern der Konditioniereinrichtung (19) und/oder Versorgungseinrichtung (11) in den einzelnen Wachstumsräumen (3) abhängig von den durch die Erfassungseinrichtung erfassten Werten ausgebildet ist.

6. Verfahren zur Aufzucht von Pflanzen (4) in einem geschlossenen Innenraum (2), mit
- einer Vielzahl von Wachstumsräumen (3), in welchen eine oder mehrere aufzuziehende Pflanzen (4) aufgenommen werden, und
- mindestens einer Konditioniereinrichtung (19), mit welcher die für das Pflanzenwachstum notwendigen Umgebungsbedingungen eingestellt werden, wobei die Konditioniereinrichtung (19) mindestens eine Beleuchtungseinrichtung (20) umfasst, insbesondere mit einer Anordnung nach einem der Ansprüche 1 bis 5,
- wobei jedem Wachstumsraum (3) eine Konditioniereinrichtung (19) zugeordnet ist, welche eine Heiz- und/oder eine Kühleinrichtung umfasst, mit welcher eine Temperatur in dem Wachstumsraum (3) individuell angepasst und reguliert wird,
wobei in dem Innenraum (2) eine Vielzahl von Wachstumsräumen (3) vorgesehen werden, welche jeweils mit einer Umschließungswand (13, 15) umschlossen und an einer Aufnahmeeinheit (5) gebildet sind, und
wobei die Aufnahmeeinheiten (5) an einer Transportvorrichtung (25) gelagert sind, mit welcher die Aufnahmeeinheiten (5) kontinuierlich oder schrittweise durch den Innenraum/Verfahrensraum (2) transportierbar sind, **dadurch gekennzeichnet, dass** die Umschließungswand (13, 15) mit einem flexiblen Membranmaterial (14) gebildet ist.

7. Verfahren nach Anspruch 6,
dadurch**gekennzeichnet**,
dass jedem Wachstumsraum (3) eine Erfassungseinrichtung mit ein oder mehreren Sensoren zugeordnet ist, mit welchen die Umgebungsbedingungen, eine Wasser- und/oder Nährstoffversorgung und/oder ein Pflanzenwachstum erfasst werden, und
dass mindestens eine Steuereinrichtung vorgesehen ist, welche mit der Erfassungseinrichtung in Verbindung steht und die Konditioniereinrichtung (19) und/oder eine Versorgungseinrichtung in den einzelnen Wachstumsräumen (3) abhängig von den durch die Erfassungseinrichtung erfassten Daten steuert.

## Claims

1. Assembly for growing plants (4) in a closed interior (2), having
- a plurality of growing spaces (3) for receiving one or more plants (4) to be grown and
- at least one conditioning device (19) for setting the environmental conditions necessary for the growth of the plants, wherein the conditioning device (19) comprises at least one lighting device (20),
- wherein a plurality of growing spaces (3) is formed in the interior space (2), which growing spaces are each surrounded by a surrounding wall (13, 15) and are formed on a receiving unit (5), and
- - wherein each growing space (3) is assigned a conditioning device (19), which comprises a heating and/or cooling device with which a temperature in the growing space (3) can be individually adjusted and regulated, wherein the receiving units (5) are mounted on a transport device (25) with which the receiving units (5) can be transported continuously or in steps through the interior/process space (2),
**characterised in that**
the surrounding wall (13, 15) comprises a flexible membrane material (14), in particular a film, a textile material, a woven fabric, a knitted fabric or a mesh, wherein the membrane material (14) is preferably gas permeable.

2. Assembly according to claim 1,
**characterised in that**
- the receiving units (5) each have a substrate (9) holding the plant for receiving one or more plants (4) and a supply device (11) for supplying water and/or nutrients.

3. Assembly according to any one of claims 1 to 2,
**characterised in that**
- the conditioning device (19), in addition to a lighting device (20), has at least one of the following devices:
- a ventilation device,
- a humidification device (21),
- an irrigation device and/or
- a fumigation or pollination device.

4. Assembly according to any one of claims 1 to 3,
**characterised in that**
- each growing space (3) is subdivided into further horizontally structured subspaces (6, 7, 8), in particular into an upper/outer subspace (6) for the plant parts exposed to the light and into a lower/inner subspace (8) for plant parts on the soil side.

5. Assembly according to any one of claims 1 to 4,
**characterised in that**
- each growing space (3) is assigned a detection device having one or more sensors being designed to detect environmental conditions, a water and/or nutrient supply, and/or plant growth, and
- **in that** at least one control device is provided, which is connected to the detection device and is designed to control the conditioning device (19) and/or supply device (11) in the individual growing spaces (3) depending on the values detected by the detection device.

6. Method for growing plants (4) in a closed interior (2), having
- a plurality of growing spaces (3) in which one or more plants (4) to be grown are received, and
- at least one conditioning device (19) with which the environmental conditions necessary for the growth of the plants can be set, wherein the conditioning device (19) comprises at least one lighting device (20), in particular having an assembly according to any one of claims 1 to 5,
- wherein each growing space (3) is assigned a conditioning device (19), which comprises a heating and/or cooling device with which a temperature in the growing space (3) can be individually adjusted and regulated,
- wherein a plurality of growing spaces (3) is provided in the interior space (2), which growing spaces are each surrounded by a surrounding wall (13, 15) and are formed on a receiving unit (5), and
wherein the receiving units (5) are mounted on a transport device (25) with which the receiving units (5) can be transported continuously or in steps through the interior/process space (2), c h a r a c t e r i s e d in that the surrounding wall (13, 15) is formed with a flexible membrane material (14).

7. Method according to claim 6,
**characterised in that**
each growing space (3) is assigned a detection device having one or more sensors with which the environmental conditions, a water and/or nutrient supply, and/or plant growth are detected, and
**in that** at least one control device is provided, which is connected to the detection device and controls the conditioning device (19) and/or a supply device in the individual growing spaces (3) depending on the data detected by the detection device.

## Revendications

1. Agencement pour la culture de plantes (4) dans un espace intérieur fermé (2), avec
- une pluralité d'espaces de croissance (3) pour recevoir une ou plusieurs plantes (4) à cultiver et
- au moins un appareil de conditionnement (19) pour ajuster les conditions ambiantes nécessaires à la croissance des plantes, l'appareil de conditionnement (19) comprenant au moins un appareil d'éclairage (20),
- une pluralité d'espaces de croissance (3) étant réalisés dans l'espace intérieur (2), lesquels sont respectivement entourés par une paroi d'enceinte (13, 15) et formés sur une unité de réception (5), et
- - un appareil de conditionnement (19) étant associé à chaque espace de croissance (3), qui comprend un appareil de chauffage et/ou un appareil de refroidissement avec lequel une température dans l'espace de croissance (3) peut être adaptée et régulée individuellement, les unités de réception (5) étant montées sur un dispositif de transport (25) avec lequel les unités de réception (5) peuvent être transportées en continu ou par étapes à travers l'espace intérieur/l'espace de traitement (2),
**caractérisé en ce que**
la paroi d'enceinte (13, 15) comprend un matériau de membrane flexible (14), notamment une feuille, un matériau textile, un tissu, un tricot ou un filet, le matériau de membrane (14) étant de préférence réalisé sous forme perméable aux gaz.

2. Agencement selon la revendication 1,
**caractérisé en ce que**
- les unités de réception (5) présentent chacune un substrat (9) supportant la plante pour recevoir une ou plusieurs plantes (4) et un appareil d'approvisionnement (11) pour amener de l'eau et/ou des substances nutritives.

3. Agencement selon l'une quelconque des revendications 1 à 2,
**caractérisé en ce que**
- l'appareil de conditionnement (19) présente, outre un appareil d'éclairage (20), au moins l'un des appareils suivants :
- un appareil d'aération,
- un appareil d'humidification (21),
- un appareil d'arrosage et/ou
- un appareil de fumigation ou de pollinisation.

4. Agencement selon l'une quelconque des revendications 1 à 3,
**caractérisé en ce que**
- chaque espace de croissance (3) est divisé en d'autres sous-espaces (6, 7, 8) segmentés horizontalement, notamment un sous-espace supérieur/extérieur (6) pour les parties de la plante exposées à la lumière et un sous-espace inférieur/intérieur (8) pour les parties de la plante situées au sol.

5. Agencement selon l'une quelconque des revendications 1 à 4,
**caractérisé en ce qu'**
- à chaque espace de croissance (3) est associé un appareil de détection avec un ou plusieurs capteurs qui sont réalisés pour détecter les conditions ambiantes, un approvisionnement en eau et/ou en substances nutritives et/ou une croissance des plantes, et
- **en ce qu'**il est prévu au moins un appareil de commande qui est en liaison avec l'appareil de détection et qui est réalisé pour commander l'appareil de conditionnement (19) et/ou l'appareil d'alimentation (11) dans les différents espaces de croissance (3) en fonction des valeurs détectées par l'appareil de détection.

6. Procédé de culture de plantes (4) dans un espace intérieur fermé (2), avec
- une pluralité d'espaces de croissance (3) dans lesquels sont reçues une ou plusieurs plantes (4) à cultiver, et
- au moins un appareil de conditionnement (19) avec lequel sont ajustées les conditions ambiantes nécessaires à la croissance des plantes, l'appareil de conditionnement (19) comprenant au moins un appareil d'éclairage (20), notamment avec un agencement selon l'une quelconque des revendications 1 à 5,
- un appareil de conditionnement (19) étant associé à chaque espace de croissance (3), lequel comprend un appareil de chauffage et/ou un appareil de refroidissement, avec lequel une température dans l'espace de croissance (3) est adaptée et régulée individuellement,
une pluralité d'espaces de croissance (3) étant prévus dans l'espace intérieur (2), lesquels sont respectivement entourés par une paroi d'enceinte (13, 15) et formés sur une unité de réception (5), et les unités de réception (5) étant montées sur un dispositif de transport (25) avec lequel les unités de réception (5) peuvent être transportées en continu ou par étapes à travers l'espace intérieur/de traitement (2), **caractérisé en ce que** la paroi d'enceinte (13, 15) est formée avec un matériau de membrane flexible (14).

7. Procédé selon la revendication 6,
**caractérisé en ce qu'**
à chaque espace de croissance (3) est associé un appareil de détection avec un ou plusieurs capteurs, avec lesquels les conditions ambiantes, un approvisionnement en eau et/ou en substances nutritives et/ou une croissance des plantes sont détectés, et
**en ce qu'**il est prévu au moins un appareil de commande, qui est en liaison avec l'appareil de détection et qui commande l'appareil de conditionnement (19) et/ou un appareil d'approvisionnement dans les différents espaces de croissance (3) en fonction des données détectées par l'appareil de détection.
